(19) Europäisches Patentamt
European Patent Office
Office européen des brevets

(11) **EP 1 024 344 B1**

## (12) EUROPÄISCHE PATENTSCHRIFT

(45) Veröffentlichungstag und Bekanntmachung des Hinweises auf die Patenterteilung:
**13.11.2002   Patentblatt 2002/46**

(51) Int Cl.$^7$: **G01C 15/00**

(21) Anmeldenummer: **99101443.2**

(22) Anmeldetag: **27.01.1999**

(54) **Vermessungsgerät mit einer Höhenmesseinrichtung**

Surveying instrument with height measuring system

Appareil géodésique avec dispositif de mesure de hauteur

(84) Benannte Vertragsstaaten:
**CH DE FR GB LI SE**

(43) Veröffentlichungstag der Anmeldung:
**02.08.2000   Patentblatt 2000/31**

(73) Patentinhaber: **Leica Geosystems AG**
**9435 Heerbrugg (CH)**

(72) Erfinder: **Schneider, Klaus Dr.**
**6845 Hohenems (AT)**

(74) Vertreter: **Büchel, Kurt F. et al**
**Büchel, Kaminski & Partner**
**Austrasse 79**
**9490 Vaduz (LI)**

(56) Entgegenhaltungen:
**EP-A- 0 856 718          DE-A- 3 122 483**
**DE-A- 19 802 379**

**Beschreibung**

Die Erfindung bezieht sich auf ein Vermessungsgerät mit einer Einrichtung zur Bestimmung der Höhe über einem Bodenpunkt nach dem Oberbegriff des Patentanspruchs 1.

Für geodätische Vermessungen ist es erforderlich, dass die Höhe des Vermessungsgeräts über einem Referenzpunkt am Boden hinreichend genau bekannt ist. Bei einem in der DE 198 02 379 A1 gezeigten Vermessungsgerät wird zur Messung der Höhe des Geräts über dem Boden eine auch für horizontale Entfernungsmessungen geeignete Infrarotentfernungsmesseinrichtung verwendet. Hierzu wird das Fernrohr mit einem Vorbau bestückt, der den ausgesandten Lichtstrahl um die Alhidade und den Kopf des das Vermessungsgerät tragenden Stativs herum lenkt und auf den Bodenpunkt richtet. Der Vorbau enthält einen Planspiegel mit einstellbarer Neigung. Ein Messprozessor ermittelt die Höhe der Kippachse des Fernrohrs über dem Bodenpunkt aus der gemessenen Länge der Strecke von der Kippachse über den Planspiegel zum Bodenpunkt und dem Winkel, den der Planspiegels mit der Lichtachse des Fernrohrs einschliesst. Bei einer anderen Ausführung des Vermessungsgeräts wird die Höhe der Kippachse über dem Bodenpunkt aus dem Winkel, den die Lichtachse des Fernrohrs mit der Horizontalen einschliesst, sowie dem Winkel, den der Planspiegel mit der Lichtachse des Fernrohrs einschliesst, ermittelt.

Die Bestimmung des Winkels zwischen Planspiegel und Lichtachse des Fernrohrs ist relativ ungenau. Geringe Messfehler wirken sich aber erheblich auf die Genauigkeit der berechneten Höhe aus. Die Anwendung des Geräts für präzise Vermessungsaufgaben ist daher problematisch. Ausserdem erfolgt die Winkelmessung am Planspiegel manuell. Der Winkelwert muss daher dem Messprozessor durch eine Tastatureingabe mitgeteilt werden.

Die Aufgabe der Erfindung besteht darin, ein Vermessungsgerät der eingangs genannten Art derart zu verbessern, dass die Höhenbestimmung genauer erfolgen kann.

Gemäss der Erfindung wird diese Aufgabe durch ein Vermessungsgerät nach den Merkmalen des Patentanspruchs 1 gelöst.

Anstelle eines Planspiegels wie bei dem Vermessungsgerät nach dem Stand der Technik wird bei einem Vermessungsgerät gemäss der Erfindung zur Strahlumlenkung ein Reflektor, der gleichzeitig eine Strahlaufweitung bewirkt, verwendet. Der Öffnungswinkel des aufgeweiteten Strahls ist so eingestellt, dass der Bodenpunkt für die im Betrieb möglichen Höhen stets beleuchtet wird. Ein am Bodenpunkt angeordneter Reflektor ermöglicht der Entfernungsmesseinrichtung im Gerät, die Entfernung des Bodenpunkts von der Drehachse oder Kippachse des Fernrohrs über die Strahlumlenkung zu messen.

Zweckmäßigerweise kann die Stellung des Fernrohrs variabel sein und wird zur Höhenbestimmung erfaßt. Die Kippwinkelstellung des Fernrohrs steht durch einen ohnehin vorhandenen Kippwinkelkoder zur Verfügung. Eine prozessorgestützte Auswerteeinrichtung berechnet daraus unter Anwendung trigonometrischer Beziehungen die Höhe der Kippachse des Fernrohrs über dem am Bodenpunkt angeordneten Reflektor.

Entfernungs- und Winkelmessung werden mit der üblichen hohen Messgenauigkeit des Geräts ausgeführt, so dass die Höhe über dem Bodenpunkt hinreichend genau bestimmbar ist. Da Entfernungs- und Winkelmessung bereits bisher unter Prozessorsteuerung erfolgen, kann die Höhenmessung durch einfache Softwareänderung automatisiert werden.

Zur Strahlumlenkung und gleichzeitiger Strahlaufweitung eignet sich ein gewölbter Spiegel oder ein Prisma mit gewölbter reflektierender Fläche oder eine entsprechende Kombination aus Spiegel, Linse und/oder Prisma. Vorzugsweise wird der vom Fernrohr ausgesandte Infrarot- oder Laserlichtstrahl in einer vertikalen, d.h. zur horizontalen Kippachse senkrechten Ebene aufgeweitet. Der Spiegel beziehungsweise die Spiegel/Linsen/Prismenkombination weitet den ausgesandten Lichtstrahl soweit auf, dass das auf den Boden auftreffende Licht bei ungefähr horizontaler Stellung des Fernrohrs den Bodenpunkt bei den üblichen Arbeitshöhen beispielsweise zwischen 1,00 m bis 2,20 m beleuchtet. Ein genaues Anvisieren des Bodenpunkts ist nicht erforderlich. Mit einer Strahlaufweitung auch in horizontaler Richtung wird erreicht, dass zur Höhenmessung auch Bodenpunkte geringfügig ausserhalb der Lotlinie unter dem Gerät herangezogen werden können.

Insbesondere bei motorisierten Geräten kann die Gerätesteuerung so programmiert werden, dass die Höhenmessung vollautomatisch abläuft. Eine manuelle Höheneingabe ist nicht mehr notwendig.

Nachfolgend wird die Erfindung anhand des in der Zeichnung dargestellten Ausführungsbeispiels im Detail erläutert. Entsprechende Elemente sind mit gleichen Bezugszeichen versehen.
Es zeigen

Figur 1    einen auf einem Stativ montierten Theodoliten während einer Höhenmessung und

Figur 2    eine geometrische Ersatzdarstellung relevanter Strekken und Winkel im Gerät der Figur 1.

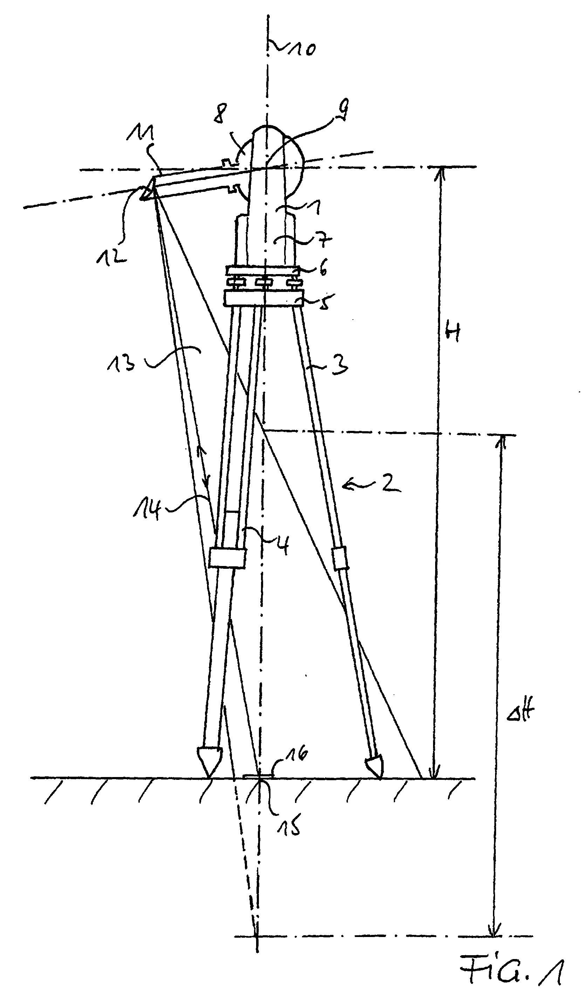

In Figur 1 ist das einen Theodoliten 1 tragende Stativ 2 ein herkömmliches Dreibeinstativ, von dem die Beine 3 und 4 dargestellt sind. Die Stativbeine sind an einem Stativkopf 5 drehbar befestigt. Ein auf dem Stativkopf aufgesetzter Dreifuss 6 ist horizontal ausgerichtet und trägt den Theodoliten 1. Die Stativbeine sind ausschwenkbar und in der Länge verstellbar, um den Theodoliten in einer gewünschten Höhe zu positionieren. Der Theodolit 1 umfasst eine auf dem Dreifuss 6 um eine vertikale Achse 10 drehbare Alhidade 7, in der ein um eine horizontale Achse 9 drehbares Fernrohr 8 angeordnet ist. Das Fernrohr 8 enthält einen Lichtsender, um durch Anvisieren eines Raumpunktes Vertikal- und Horizontalwinkel zu messen. Der Lichtsender arbeitet auf Basis von Infrarot- oder Laserlicht. Ausserdem ist ein Lichtempfänger vorgesehen, der das vom Fernrohr ausgesandte und von einem Reflektor zurückgesandte Infrarot- oder Laserlicht empfängt. Unter Anwendung von Modulations- oder Phasenmesstechniken wird durch Vergleich von ausgesandtem und empfangenen Lichtstrahl die Entfernung des Reflektors ermittelt. Dadurch werden Entfernungen von Messpunkten im Gelände gemessen.

Die Vermessungsaufgaben erfolgen relativ zu einem Bodenpunkt 15, durch den die vertikale Achse 10 des Theodoliten 1 verläuft. Für die Geländevermessung ist eine hinreichend genaue Kenntnis der Höhe H der Kippachse 9 des Fernrohrs 8 über dem Bodenpunkt 15 erforderlich. Zu deren Bestimmung wird die im Fernrohr 8 enthaltene Entfernungsmesseinrichtung ebenfalls verwendet. Eine Einrichtung zur Strahlumlenkung 12 lenkt den vom Infrarot- oder Laserlichtsender des Fernrohrs 8 ausgesandten Lichtstrahl unter das Stativ 2 in Richtung des Bodenpunkts 15 ab. Die Strahlumlenkung 12 ist am äusseren Ende eines Vorbaus 11 angeordnet, welcher auf das lichtaustrittsseitige Ende des Fernrohrs 8 aufgesetzt ist. Die Länge des Vorbaus 11 ist derart eingestellt, dass die Strahlumlenkung ausreichend weit von der Kippachse 9 entfernt ist, dass das nach unten umgelenkte Licht ungehindert an der Alhidade 7 und am Stativkopf 5 vorbei zum Bodenpunkt 5 unter dem Stativ 2 verlaufen kann.

Die Einrichtung zur Strahlumlenkung 12 weitet den vom Fernrohr 8 ausgesandten Lichtstrahl auf. Der Lichtstrahl trifft auf der Strahlumlenkung 12 nahezu punktförmig auf und wird zumindest innerhalb der vertikalen Ebene, die senkrecht zur Kippachse 9 und durch die vertikale Achse 10 verläuft, in eine Lichtfläche 13 aufgeweitet. Ein am Bodenpunkt 15 angeordneter Reflektor 16 streut das längs des Strahls 14 ankommende Licht. Ein rückgestreuter Anteil läuft längs des Strahls 14 und über die Strahlumlenkung 12 wieder zurück in das Fernrohr 8. Dort wird eine Entfernungsmessung durchgeführt, welche die Länge der Strecke von der Kippachse 9 zum Auftreffpunkt an der Strahlumlenkung 12 und längs des Strahls 14 zum Reflektor 16 angibt.

Als Einrichtung zur Strahlumlenkung 12 eignen sich herkömmliche bekannte Mittel, beispielsweise ein gewölbter Spiegel oder ein Prisma mit einer gewölbten reflektierenden Seite oder eine entsprechende Kombination von Linse und Spiegel und/oder Prisma. Der Öffnungswinkel der Aufweitung des Lichtstrahls durch die Strahlumlenkung 12 ist so eingestellt, dass bei ungefähr horizontaler Ausrichtung des Fernrohrs 8, wenn die Achse des ausgesandten Infrarot- oder Laserlichts in etwa mit der durch die Kippachse 9 verlaufenden Horizontalebene zusammenfällt, der Bodenpunkt 15 beziehungsweise der Reflektor 16 bei allen im Betrieb des Theodoliten zu erwartenden Höhen H innerhalb der Lichtfläche 13 liegt und vom Licht angestrahlt wird. Der bei der in Figur 1 dargestellten Neigung des Fernrohrs 8 gegenüber der Horizontalen zulässige Unterschied zwischen minimaler und maximaler Höhe der Kippachse 9 des Theodoliten 1 über dem Bodenpunkt 15 ist mit ΔH bezeichnet. In der Praxis weist der aufgeweitete Strahl 13 einen solchen Öffnungswinkel auf, dass bei nahezu horizontaler Stellung des Fernrohrs 8 ein Bodenpunkt 15 in der vertikalen Achse 10 bei Höhen H im Bereich von 1,0 m bis 2,2 m erfasst wird.

Die durch die Strahlumlenkung 12 bewirkte Strahlaufweitung kann zusätzlich auch in eine Richtung parallel zur Kippachse 9, d.h. horizontal, erfolgen. Damit wird erreicht, dass auch Bodenpunkte 15 leicht ausserhalb der vertikalen Achse des Theodoliten zur Höhenmessung herangezogen werden können. Die Drehstellung des Fernrohrs bezüglich der vertikalen Achse 10 ist dabei derart gewählt, dass das Licht möglichst in der Mitte zwischen zwei Stativbeinen verläuft. Zweckmässigerweise erfolgt die Strahlaufweitung derart, daß die Fläche unterhalb des Stativs zwischen den auf dem Boden aufgesetzten Stativbeinen vom Lichtkegel ausgeleuchtet wird.

Als Reflektoren 16 können herkömmliche Retroreflektoren, beispielsweise Reflexionsfolien oder Reflexionsprismen verwendet werden. Wesentlich ist, dass der Reflexionsgrad des Reflektors 16 soviel grösser als der Reflexionsgrad der Umgebung ist, dass von den Umgebungsobjekten reflektiertes Infrarot- oder Laserlicht die Messung nicht verfälscht.

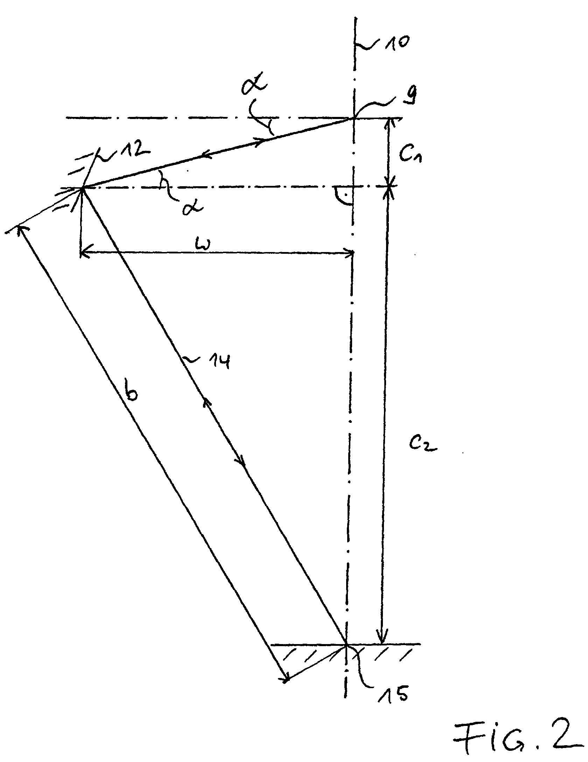

Für die Höhe des Theodoliten 1, d.h. die Höhe H der Kippachse 9 über dem Bodenpunkt 15, ergibt sich folgender in Figur 2 dargestellter geometrischer Zusammenhang:

$$H = c_1 + c_2$$

$$c_1 = a \cdot \sin \alpha$$

$$c_2 = \sqrt{b^2 - w^2},$$

mit $b = L - a$ und $w = a \cdot \cos \alpha$

Die Länge der Strecke a ist konstruktiv als Abstand des Reflektors zur Strahlumlenkung 12 von der Kippachse 9 vorgegeben. Der Winkel $\alpha$ ist der Winkel, der von der Lichtachse des vom Fernrohr ausgesandten Lichts und der Horizontalen eingeschlossen ist. Die Strecke L ist die von der Entfernungsmesseinrichtung gemessene Länge der Strecke von der Kippachse 9 über die Strahlumlenkung 12 zum Bodenpunkt 15 beziehungsweise dem dort angeordneten Reflektor 16. Somit ergibt sich für die Höhe H des Theodoliten über

dem Bodenpunkt:

$$H = a \cdot \sin \alpha + \sqrt{(L - a)^2 - (a \cdot \cos \alpha)^2}$$

Die Bestimmung der Höhe H erfordert nur die Messung des Winkels $\alpha$ und der Entfernung L des Bodenpunkts 15 von der Kippachse 9 über den Strahlumlenkungsreflektor 12. Die Entfernung L wird durch die im Fernrohr enthaltene Entfernungsmesseinrichtung gemessen. Der Winkel $\alpha$ wird durch einen Winkelkoder ermittelt. Der Winkelkoder arbeitet beispielsweise nach einem inkrementalen, dynamischen oder statisch kodierten Verfahren und liefert ein für die Genauigkeitsanforderung der Höhenmessung ausreichend exaktes Ergebnis. Sowohl Entfernungsmessung als auch Winkelmessung gehören zum herkömmlichen Funktionsumfang eines Theodoliten. Die Genauigkeit der Messungen ist daher relativ hoch. Wenn das Fernrohr während der Entfernungsmessung in einer vorbestimmten Position gehalten wird, z.B. horizontal mit $\alpha = 0$, vereinfacht sich die obige Formel und die Berechnung.

Die Gerätesteuerung des Theodoliten 1 wird von einem Mikroprozessor ausgeführt. Nachdem eine Bedienperson den Vorbau auf das Fernrohr 8 aufgesetzt und arretiert hat und das Fernrohr in ungefähr horizontale Lage gebracht hat, wird die Höhenmessung durch eine Eingabe einer Bedienperson, beispielsweise über die Tastatur, aktiviert. Die Gerätesteuerung ermittelt den Winkel $\alpha$ über den entsprechenden Winkelkoder sowie die Länge L über die Distanzmessung im Fernrohr 8. Die Daten werden im Mikroprozessor unter Anwendung der obigen Formel oder einer davon abgeleiteten ausreichend genauen Näherung verarbeitet. Die Höhe H steht dann dem Gerät für Vermessungsaufgaben im Gelände zur Verfügung.

Von der Bedienperson ist sicherzustellen, dass der aufgeweitete Lichtstrahl den Reflektor 16 am Bodenpunkt 15 erfasst. Die Bedienerführung am Instrument ist zweckmässigerweise so ausgeführt, dass in Abhängigkeit von der Kippstellung des Fernrohrs 8 gegenüber der Horizontalen angezeigt wird, in welchem Wertebereich die Höhe H gemessen werden kann. Zusätzlich oder alternativ kann angezeigt werden, ob im Fernrohr 8 ein vom Reflektor 16 reflektierter Lichtstrahl empfangen wird.

Wenn der Theodolit einen Stellmotor zur Drehung des Fernrohrs 8 um die Achse 9 aufweist, kann die Höhenmessung vollautomatisch vom Gerät durchgeführt werden. Wenn das Fernrohr 8 soweit aus. der Horizontalen ausgelenkt ist, dass der Reflektor 16 am Bodenpunkt 15 vom aufgeweiteten Lichtstrahl 13 nicht erfasst wird, wird das Fernrohr 8 solange nachgestellt, bis ein vom Reflektor 16 reflektierter Strahl erkannt wird, um die Messung durchzuführen.

## Patentansprüche

1. Vermessungsgerät mit einer Einrichtung zur Bestimmung der Höhe (H) über einem Bodenpunkt (15) mit einer Lichtsendeeinrichtung (8), einer Einrichtung zur Messung der Entfernung eines ausgesandtes Licht (13) reflektierenden Objekts (16), einer Einrichtung zur Strahlumlenkung (12), durch die das ausgesandte Licht in Richtung des Bodens umlenkbar ist, und einer Auswerteeinrichtung, durch die in Abhängigkeit von der gemessenen Entfernung die Höhe (H) über dem Bodenpunkt (15) ermittelbar ist, **dadurch gekennzeichnet, dass** durch die Einrichtung zur Strahlumlenkung (12) eine Strahlaufweitung des ausgesandten Lichtstrahls (13) bewirkt wird.

2. Vermessungsgerät nach Anspruch 1, **dadurch gekennzeichnet, dass** die Lichtsendeeinrichtung (12) eine Empfangseinrichtung für das vom Objekt (16) reflektierte Licht (14) aufweist, dass die Lichtsende- und Empfangseinrichtung (8) um eine Kippachse (9) drehbar ist und dass die Auswerteeinrichtung die Höhe (H) ausserdem in Abhängigkeit von einem Winkel ($\alpha$) zwischen einer Referenzebene und einer Lichtachse der Lichtsende- und Empfangseinrichtung (8) ermittelt.

3. Vermessungsgerät nach Anspruch 1 oder 2, **dadurch gekennzeichnet, dass** die Einrichtung zur Strahlumlenkung (12) eine Strahlumlenkung mindestens in eine Richtung senkrecht zur Kippachse (9) bewirkt.

4. Vermessungsgerät nach Anspruch 3, **dadurch gekennzeichnet, dass** die Einrichtung zur Strahlumlenkung (12) eine Strahlumlenkung in eine Richtung parallel zur Kippachse (9) bewirkt.

5. Vermessungsgerät nach einem der Ansprüche 1 bis 4, **gekennzeichnet durch** einen Winkelkoder, **durch** den der Winkel zwischen einem feststehendem Teil (7) des Vermessungsgeräts (1) und der Lichtsende- und Empfangseinrichtung (8) ermittelbar ist und an die Auswerteeinrichtung übertragbar ist.

6. Vermessungsgerät nach Anspruch 5, **dadurch gekennzeichnet, dass** durch die Auswerteeinrichtung die Höhe H gemäss der Beziehung $H = a \cdot \sin \alpha + \sqrt{(L - a)^2 - (a \cdot \cos \alpha)^2}$ zumindest näherungsweise berechenbar ist, wobei a der Abstand der Einrichtung zur Strahlumlenkung (12) von der Kippachse (9) ist, L die von der Auswerteeinrichtung gemessene Entfernung ist und $\alpha$ der Winkel zwischen einer horizontalen Ebene und der Lichtachse der Lichtsende- und Empfangseinrichtung (8) ist.

**7.** Vermessungsgerät nach einem der Ansprüche 1 bis 6, **dadurch gekennzeichnet, dass** das Vermessungsgerät (1) auf einem höhenverstellbaren Stativ (2) angeordnet ist und dass durch die Einrichtung zur Strahlumlenkung (12) ein sich öffnender Lichtstrahl (13) erzeugbar ist, der bei im wesentlichen horizontaler Stellung der Lichtsendeeinrichtung (8) sowohl bei minimaler als auch bei maximaler Höheneinstellung des Stativs (2) einen vertikal unterhalb des Vermessungsgeräts (1) angeordneten Bodenpunkt (15) erfasst.

**8.** Vermessungsgerät nach einem der Ansprüche 1 bis 7, **dadurch gekennzeichnet, dass** die Einrichtung zur Strahlumlenkung (12) einen gewölbten Spiegel oder eine Kombination aus einer Linse, einem Prisma und/oder einem Spiegel umfasst.

**Claims**

**1.** Surveying instrument comprising a system for determining the height (H) above a point (15) on the ground, having a light-transmitting means (8), a means for measuring the distance of an object (16) reflecting emitted light (13), a means for beam deflection (12) by which the emitted light can be deflected in the direction of the ground, and an evaluating means by which the height (H) above the point (15) on the ground can be determined as a function of the measured distance, **characterized in that** the means for beam deflection (12) causes divergence of the emitted light beam (13).

**2.** Surveying instrument according to Claim 1, **characterized in that** the light transmitting means (12) has a receiving means for the light (14) reflected by the object (16), that the light transmitting and receiving means (8) is rotatable about a pivot axis (9) and that the evaluating means determines the height (H) also as a function of an angle ($\alpha$) between a reference plane and a light axis of the light transmitting and receiving means (8).

**3.** Surveying instrument according to Claim 1 or 2, **characterized in that** the means for beam deflection (12) causes beam deflection at least in a direction perpendicular to the pivot axis (9).

**4.** Surveying instrument according to Claim 3, **characterized in that** the means for beam deflection (12) causes beam deflection in a direction parallel to the pivot axis (9).

**5.** Surveying instrument according to any of Claims 1 to 4, **characterized by** an angle encoder by means of which the angle between a stationary part (7) of the surveying instrument (1) and the light transmitting and receiving means (8) can be determined and can be transmitted to the evaluating means.

**6.** Surveying instrument according to Claim 5, **characterized in that** the height H can be calculated at least approximately by the evaluating unit according to the relationship $H = a \cdot \sin \alpha + \sqrt{(L - a)^2 - (a \cdot \cos\alpha)^2}$, where a is the distance of the means for beam deflection (12) from the pivot axis (9), L is the distance measured from the evaluating means and $\alpha$ is the angle between a horizontal plane and the light axis of the light transmitting and receiving means (8).

**7.** Surveying instrument according to any of Claims 1 to 6, **characterized in that** the surveying instrument (1) is arranged on a height-adjustable stand (2) and that a divergent light beam (13) which measures a point (15) on the ground which is arranged vertically below the surveying instrument (1) in a substantially horizontal position of the light transmitting means (8), both with minimum and maximum height setting of the stand (2), can be produced by the means for beam deflection (12).

**8.** Surveying instrument according to Claims 1 to 7, **characterized in that** the means for beam deflection (12) comprises a convex mirror or a combination of a lens, a prism and/or a mirror.

**Revendications**

**1.** Appareil géodésique muni d'un dispositif de mesure de la hauteur (H) au-dessus d'un point au sol (15), avec un dispositif photoémetteur (8), un dispositif de mesure de la distance d'un objet (16) réfléchissant une lumière (13) émise, un dispositif de déviation des rayons (12), au moyen duquel la lumière émise est déviée en direction du sol, et un dispositif d'évaluation, au moyen duquel, en fonction de la distance mesurée, on peut déterminer la hauteur (H) au-dessus du point au sol (15), **caractérisé en ce qu'**un élargissement du rayon de lumière (13) émis est provoqué au moyen du dispositif de déviation des rayons (12).

**2.** Appareil géodésique selon la revendication 1, **caractérisé en ce que** le dispositif photo-émetteur (8) présente un dispositif récepteur pour la lumière (14) réfléchie par l'objet (16), **en ce que** le dispositif photo-émetteur et récepteur (8) est susceptible de tourner autour d'un axe de basculement (9), et **en ce que** le dispositif d'évaluation détermine la hauteur (H) en outre en fonction d'un angle ($\alpha$) entre un plan de référence et un axe de la lumière du dispositif photo-émetteur et récepteur (8).

**3.** Appareil géodésique selon la revendication 1 ou 2, **caractérisé en ce que** le dispositif de déviation des rayons (12) provoque une déviation des rayons au moins dans une direction perpendiculaire à l'axe de basculement (9).

4. Appareil géodésique selon la revendication 3, **caractérisé en ce que** le dispositif de déviation des rayons (12) provoque une déviation des rayons dans une direction parallèle à l'axe de basculement (9).

5. Appareil géodésique selon l'une des revendications 1 à 4, **caractérisé par** un codeur angulaire, au moyen duquel l'angle, entre une partie (7) stationnaire de l'appareil géodésique (1) et le dispositif photo émetteur et récepteur (8), peut être déterminé et peut être transmis au dispositif d'évaluation.

6. Appareil géodésique selon la revendication 5, **caractérisé en ce que**, au moyen du dispositif d'évaluation, on peut calculer au moins approximativement la hauteur (H) selon la relation $H = a.\sin\alpha + \sqrt{(L - a)^2 - (a.\cos\alpha)^2}$, sachant que a est la distance du dispositif de déviation des rayons (12) par rapport à l'axe de basculement (9), L est la distance mesurée depuis le dispositif d'évaluation et $\alpha$ est l'angle entre un plan horizontal et l'axe de la lumière du dispositif photo-émetteur et récepteur (8).

7. Appareil géodésique selon l'une des revendications 1 à 6, **caractérisé en ce que** l'appareil géodésique (1) est disposé sur un pied (12) réglable en hauteur, et **en ce que**, au moyen du dispositif de déviation des rayons (12), peut être produit un rayon lumineux (13) divergent qui, lorsque le dispositif photo-émetteur et récepteur (8) est en position sensiblement horizontale, englobe un point au sol (15) disposé verticalement au-dessous de la l'appareil géodésique (1), tant lorsque le réglage en hauteur du pied (2) est minimal qu'également lorsqu'il est maximal.

8. Appareil géodésique selon l'une des revendications 1 à 7, **caractérisé en ce que** le dispositif de déviation des rayons (12) comprend un miroir bombé ou bien une combinaison d'une lentille, d'un prisme et/ou d'un miroir.

Fig. 1

FiG. 2